Europäisches Patentamt

European Patent Office

Office européen des brevets

(11) Publication number: **0 237 148**
**A1**

# (12) EUROPEAN PATENT APPLICATION

(21) Application number: **87300352.9**

(22) Date of filing: **16.01.87**

(51) Int. Cl.⁴: **B60T 7/04** , B60T 11/16

(30) Priority: **06.02.86 US 826887**

(43) Date of publication of application:
**16.09.87 Bulletin 87/38**

(84) Designated Contracting States:
**DE FR GB**

(71) Applicant: **GENERAL MOTORS CORPORATION
General Motors Building 3044 West Grand
Boulevard
Detroit Michigan 48202(US)**

(72) Inventor: **Parker, Donald Lee
7967 Meyers Road
Middletown Ohio 45042(US)**

(74) Representative: **Breakwell, John Neil Bower et
al
GM Patent Section Vauxhall Motors Limited
Luton Office (F6) P.O. Box No. 3 Kimpton
Road
Luton Bedfordshire LU2 0SY(GB)**

(54) Booster assembly mounting arrangement.

(57) A booster assembly (44) is attached to a dash
panel (l2) by means of a slotted hinge arrangement -
(56,70) at the top of a booster assembly mounting
bracket (50) and bolts (76) received in aligned ap-
ertures (62,74) at the bottom. A push rod (32) is
connected to a brake pedal (l6,22) in such a manner
that the entire mounting and connection operation
may be accomplished from the forward side of the
dash.

Fig. 1

## BOOSTER ASSEMBLY MOUNTING ARRANGEMENT

This invention relates to a booster assembly mounting arrangement as specified in the preamble of claim l, for example as disclosed in US-A-3 7l4 780.

The invention is concerned with providing a booster assembly mounting arrangement, in particular one for a brake booster assembly, which permits mounting of the assembly, including attachment of the booster push rod to the actuating pedal arm, from the forward side of the vehicle dash.

To this end a booster assembly mounting arrangement in accordance with the present invention is characterised by the features specified in the characterising portion of claim l.

In a preferred embodiment of a booster assembly mounting arrangement in accordance with the present invention, a pivoting-type mounting arrangement for a brake booster assembly is provided wherein the brake booster has a mounting bracket which is pivotally mated with a mounting bracket on the forward side of the vehicle dash. The booster push rod is inserted through an opening in the dash, and the push rod is connected to the operating pedal arm for actuation upon completion of assembly, without the need for further attachment operations within the passenger compartment of the vehicle. The booster is then pivoted into position so that the booster mounting bracket is in surface engagement with a portion of the vehicle dash, and the mounting bracket is then secured to the vehicle dash by suitable fastening means. Once so secured, the input push rod remains in its proper position on the operating pedal arm and is not removable therefrom without partial detachment of the booster so that it may be pivoted back to the pre-installation (that is, the partially installed) position.

A particular feature of the preferred embodiment of a booster assembly mounting arrangement in accordance with the present invention is the provision of the pivoting portion of the mounting arrangement at the top of the booster assembly· mounting bracket, and the disposition of parts secured by bolts or other suitable means at the bottom portion thereof. This permits the booster assembly to be inserted from an upwardly located region in a generally downward and rearward direction with a minimum amount of interference with other mechanisms that are commonly located forwardly of the vehicle dash. This also facilitates servicing of the booster assembly.

A further feature of the preferred embodiment of a booster assembly mounting arrangement in accordance with the present invention is the provision of the booster mounting bracket at the pivoting end as a cantilevered-type spring to help hold the booster assembly tightly in position against the forward side of the dash when the fastening means are attached.

A still further feature of the preferred embodiment of a booster assembly mounting arrangement in accordance with the present invention is the provision of the portion of the booster mounting bracket through which the mounting means such as bolts are inserted, together with the associated portion of the vehicle dash to which the bolts are attached, in such a position and orientation that the actuating force on the booster assembly when the pedal arm is actuated is transmitted back to the dash from the mounting bracket substantially in the plane of the portions of the mounting bracket and dash receiving the bolts. As a consequence, these mounting bracket and dash portions are not loaded in a manner tending to produce bending loads, but are loaded in directions substantially along the planes which these portions occupy. This provides a lesser tendency for such portions of the mounting bracket and the vehicle dash to be subjected to bending loading, such bending loading being undesirable because it could possibly contribute to metal fatigue in that area.

The connection between the input push rod and the pedal arm is more particularly described and claimed in EP-A-     (Serial No     ), based on USSN 826,893 filed 6 February l986, to which reference should be made for a more complete description of that connection.

In the drawing:

Figure l is a fragmentary elevational view, with parts broken away and in section, of a portion of a vehicle showing a preferred embodiment of a booster assembly mounting arrangement in accordance with the present invention, the booster assembly being shown in a partially installed position, ready for final pivoting movement into a fully installed position, for being finally secured in place;

Figure 2 is a fragmentary view of a portion of the booster mounting arrangement shown in Figure l, illustrating in particular the condition after the mounting arrangement has been pivoted into its fully installed position and finally secured in place, with an actuating pedal arm for the booster shown in a released position; and

Figure 3 is a fragmentary view on the line 3--3 of Figure 2, in the direction of the arrows, showing a booster mounting bracket and its relationship to portions of a vehicle dash, including its manner of attachment thereto.

With reference now to the drawing, there is shown in Figure I a fragmentary portion of a vehicle 10 including a dash 12 and a mounting panel or bracket 14. A pedal arm 16 is pivotally secured at its upper end 18 to the bracket 14 so as to pivot about a pivot axis 20 in fore-and-aft movements in a plane which is substantially parallel to the plane of the bracket 14. The pedal arm 16 has a pedal 22 secured to its lower end 24, as is well known in the art: in a typical installation, the pedal 22 is a brake pedal.

The pedal arm 16 has a bracket 26 secured to one side thereof, and the upper portion of this bracket has a slot 28 formed therein to receive a reduced-diameter portion 30 of a push rod 32. The reduced-diameter portion 30 is defined by axially spaced rounded shoulders 34 and 36 which operatively engage opposite sides of the bracket 26 when the reduced-diameter portion 30 is in the inner (bottom) end of the slot 28 as shown. A rubber bumper 38 is shown positioned between the shoulder 36 and the bracket 26 to eliminate clicking noises upon quick release of the pedal 22.

The dash 12 has an opening 40 formed therethrough, and the surrounding portion of the dash provides a face surface 42 on the forward side of the dash, which is the side opposite to where the pedal arm 16 is located. As is usual in a vehicle, the pedal arm 16 and the pedal 22 are located in the vehicle passenger compartment. The compartment on the other side of the dash 12 may be an engine compartment, a luggage compartment or some other compartment provided as a part of the vehicle, the compartment being adapted to contain a booster assembly 44.

When the booster assembly 44 forms part of a brake system, it is used to actuate a master cylinder (not shown), which may be secured in a conventional manner to the booster assembly. The push rod 32 forms the input member of the booster assembly 44, and when actuated controls conventional internal booster control valving (not shown) for selective actuation and release of the booster assembly in a manner well known in the art.

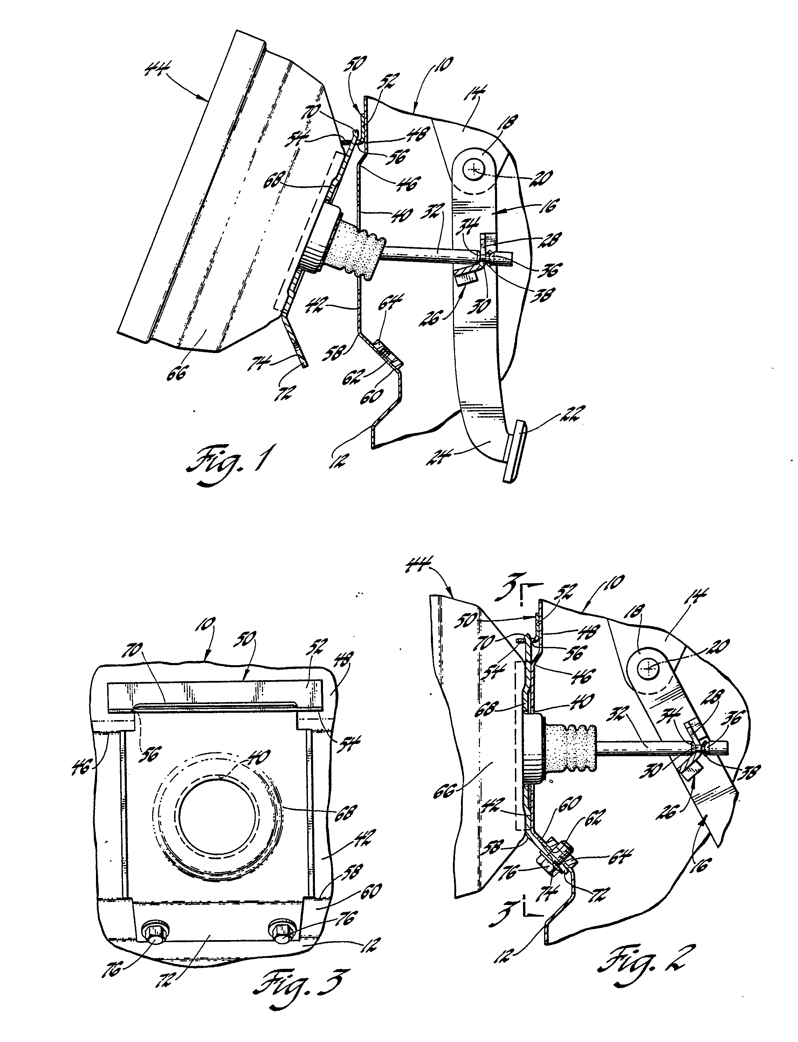

The face surface 42 of the dash 12 has an offset (bend) 46 so that a portion 48 of the dash 12 is positioned slightly rearwardly of the plane of the face surface 42. A mounting bracket 50 is secured to the portion 48 of the dash. A bracket 50 is illustrated as being generally L-shaped in cross-section, with one side 52 thereof being secured to the dash portion 48 and the other side 54 thereof projecting forwardly from the dash portion 48 beyond the plane of the face surface 42. A slot 56 is formed in the bracket side 54 and, as best seen in Figure 3, extends laterally so that it is parallel to a diameter of the opening 40 but is spaced therefrom. The slot 56 is preferably in the extended plane of the face surface 42.

In this preferred arrangement, the bracket 50 and its slot 56 are provided above the opening 40, so that a pivoting action of the booster assembly 44 -to be described -occurs at the upper portion of the mounting arrangement. However, in some circumstances it may be desirable to locate the bracket 50 and its slot 56 other than directly above the opening 40. Thus the bracket 50 may be positioned at either side of the opening, or at the bottom of the opening, for example, or at any point in between. The following description of the invention, however, will relate to the preferred embodiment illustrated with the pivoting occurring at the top of the mounting arrangement.

The lower portion of the face surface 42 is bent at a bend 58 so that a lower face portion 60 forms an acute angle with the extended plane of the face surface 42 as the lower face portion 60 is bent out of that plane. This lower face portion 60 of the face surface 42 has bolt holes 62 formed therethrough, one such bolt hole 62 being illustrated in Figures I and 2. On the opposite side of the lower face portion 60, a threaded nut 64 is secured in alignment with each of the bolt holes 62.

The booster assembly 44 has a housing 66 that is provided with a booster mounting bracket 68 secured to the rear side of the housing. The mounting bracket 68 has a tang 70 formed on the upper side thereof, the tang 70 being receivable within the slot 56 to co-operate with the side 54 of the mounting bracket 50 for providing the pivotal arrangement for booster installation. The side of the mounting bracket 68 remote from the booster housing 66 is in surface-engageable relation with the face surface 42 of the dash 12. The side of the slot 54 engaged by the side of the tang 70 facing the booster housing 66 is preferably closer to the dash portion 48 than the extended plane of the face surface 42 plus the thickness of the bracket 68. This ensures a tight fit by cantilever spring-loading the tang 70 when the booster assembly is secured in place as shown in Figure 2.

Another tang 72 is provided on the lower end of the booster mounting bracket 68. This tang 72 has bolt holes 74 formed therethrough which will be aligned with the bolt holes 62 when the booster is pivoted into position. The tang 72 is preferably bent at an acute angle out of the extended plane of the main portion of the bracket 68 so that it fits about the bend 58 and in surface engagement with the lower face portion 60 of the dash 12 when the booster is in the installed position. This is clearly illustrated in Figure 2.

Before installation of the booster assembly 44, the pedal arm 16 is depending vertically from the pivot axis 20 on the vehicle body mounting bracket 14. The booster assembly 44 is positioned on the forward side of the dash 12, with the push rod 32 inserted through the opening 40 so that the push rod reduced-diameter portion 30 is positioned at the top of the bracket slot 28. The push rod may then be released, whereupon it will slide downwardly until the reduced-diameter portion 30 rests in the inner end of the slot 28, all as more particularly described and claimed in EP-A- ( ) based on USSN 926,893 filed 6 February 1986.

The booster tang 70 is then inserted through the slot 56 of the bracket side 54 so that the booster assembly 44 is in the position shown in Figure 1. The booster is thereupon pivoted downwardly until the bolt holes 74 are in axial alignment with the bolt holes 62. This downward pivotal movement will act through the push rod 32 and the pedal bracket 26 to move the pedal arm 16 in a pivotal manner about the pivot axis 20 to the released position shown in Figure 2. Bolts 76 are then inserted through the bolt holes and threaded into the corresponding nuts 64 so as to tightly secure the booster assembly in place.

Because of the relationship of the slot 56 to the extended plane of the face surface 42 as above described, a cantilever force will be exerted on the booster mounting bracket tang 70. The tang 70 is thus spring-loaded, and acts in co-operation with the bolts 76 to hold the booster mounting bracket 68 and therefore the booster assembly 44 tightly in surface engagement with the surface 42. Due to the bend 58 of the dash and the similar bend for the tang 72, the angle of the tang 72 and the lower face portion 60 is such that when in operation the pedal arm 16 is moved to actuate the booster assembly 44, the force transmitted from the booster assembly housing back to the dash 12 will act in a direction substantially in the plane of the tang 72 and the plane of the lower face portion 60, thus stressing the bolts 76 predominantly in shear. By transmission of the forces through the sheet metal tang 72 and the lower face portion 60 of the dash 12 in this manner, substantially no bending forces are exerted on these parts, and there is therefore no bending action taking place in them tending to cause metal fatigue. The tang 70, acting as a cantilevered spring and extending sufficiently above the dash offset 46 before engaging the slot 56, is subject over the entire area of the tang to a load which is considerably below that which will tend to produce any metal fatigue thereat.

The mounting arrangement as described provides an easy way to mount the booster assembly from the forward side of the dash; it requires no additional interior passenger compartment operation for securement of the push rod to the pedal arm 16, and it also results in quick installation, so offering a saving in both time and effort.

## Claims

1. A booster assembly mounting arrangement for the installation and securing of a booster assembly (44) to a dash (12), in which the dash (12) has an opening (40) therethrough for receiving a part of the booster assembly (44) including a booster input push rod (32), the booster assembly - (44) has an input push rod (32) extending through the opening (40) in the dash (12) and connected to a pedal arm (16) for booster actuation, co-operating configurations (50,54,56,70) are formed on the booster assembly (44) and on the dash (12) in the vicinity of the opening (40) to provide a hinge arrangement permitting pivoting of the booster assembly (44) from an initially installed position to a fully installed position, and co-operating means - (60,64,72) provided with respective aligned bolt hole means (62,74) are formed on the booster assembly (44) and on the dash (12) in the vicinity of the opening (40) to permit the booster assembly - (44) and the dash (12) to be secured together in the fully installed position by bolt means (76) received in the aligned bolt hole means (62,74), characterised in that, to permit the installation and securing of the booster assembly (44) from one side of the dash (12), the mounting arrangement comprises:

a bracket (50) secured to one side of the dash - (12) in spaced relation to the opening (40), booster-supporting face means (42) formed by a part of the one side of the dash (12) around the opening (40), first bolt hole means (62) on the opposite side of the opening (40) from the bracket (50), the bracket (50) including a portion (54) extending outwardly from the one side of the dash (12), the bracket portion (54) having laterally extending slot means - (56) formed therethrough and positioned in substantially planar alignment with the face means - (42) and located on a slot axis substantially parallel to a diameter of the opening (40), and threaded nut means (64) secured to the other side of the dash - (12) in alignment with the first bolt hole means (62), a mounting bracket (68) secured to and forming a part of the booster assembly (44), the mounting bracket (68) having first tang means (70) mating with the slot means (56) on the bracket portion - (54) to form a pivoting mount and further having second tang means (72) having second bolt hole means (74) therethrough in alignment with the first bolt hole means (62) on the dash (l2), and bolt means (76) extending through the first (62) and second (74) bolt hole means and threadedly secured into the nut means (64) and thereby holding the mounting bracket (68) against the dash face means (42), the first tang means (70) when the bolt means (76) are fully tightened being subject to a cantilever force providing a spring load on the first tang means (70) ensuring tight face-supported contact of the mounting bracket (68) and the face means (42).

2. A booster assembly mounting arrangement according to claim l, characterised in that the booster assembly (44) comprises a brake booster assembly, the dash (l2) comprises a vehicle dash, the pedal arm (l6) comprises a pivotally mounted brake pedal arm having an angularly concave slotted mounting bracket (26) with the slot (28) therein opening upwardly, and the input push rod (32) of the brake booster assembly (44) has a reduced-diameter portion (30) received in the slot (28) of the mounting bracket (26) and connected to the brake pedal arm (l6) in pivotal relation for booster actuation, with the concave configuration of the slotted mounting bracket (26) preventing the input push rod (32) from leaving the slot (28) after the booster assembly (44) has been secured to the vehicle dash (l2).

3. A booster assembly mounting arrangement according to claim l or 2, characterised in that the bracket (50) secured to one side of the dash (l2) is disposed in spaced relation to and above the opening (40) in the dash (l2), the laterally extending slot means (56) is located on a slot axis substantially parallel to the horizontal diameter of the opening - (40) in the dash (l2), and the first tang means (70) comprises upwardly extending tang means.

4. A booster assembly mounting arrangement according to any one of claims l to 3, characterised in that the dash face means (42) has a bend (58) orienting a portion of the dash face means (42) at an acute angle to the plane of the portion of the dash face means (42) immediately surrounding the opening (40), with the first bolt hole means (62) being formed through the angularly bent portion of the dash face means (42) so that the bolt means - (76) are at other than right angles to the bracket slot (56) and the contacting surfaces of the second tang means (72) and the angularly bent portion of the dash face means (42) are in a plane positioned in angular relation to the face contact surfaces of the booster mounting bracket (68) and the portion of the dash face means (42) immediately surrounding the opening (40), the angle of bend being such that forces exerted on the second tang means (72) and the angularly bent portion of the dash face means (42) when the booster assembly is actuated by movement of the pedal arm (l6) are substantially in the planes thereof rather than constituting bending forces acting thereon.

Fig. 1

Fig. 3

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 371 324  (DAIMLER-BENZ) <br> * Page 3, lines 16-18; page 3, line 31 - page 4, line 6; figures * | 1 | B 60 T   7/04 <br> B 60 T  11/16 |
| | --- | | |
| A | DE-B-1 163 163  (DAIMLER-BENZ) <br> * Column 1, last paragraph * | 1 | |
| | --- | | |
| A,D | US-A-3 714 780  (GENERAL MOTORS) <br> * Abstract; figures 1,2 * | 1 | |
| | --- | | |
| A | EP-A-0 118 118  (OPEL) <br> * Abstract; figure 1 * | 2 | |
| | --- | | |
| A | FR-A-2 520 686  (GULF + WESTERN) <br> * Page 9, lines 17-21; figure 1 * | 2 | **TECHNICAL FIELDS SEARCHED (Int. Cl.4)** |
| | --- | | |
| A | WO-A-8 600 732  (ROST) <br> * Abstract; figure 1 * | 2 | B 60 T |
| | ----- | | |

The present search report has been drawn up for all claims

| Place of search | Date of completion of the search | Examiner |
|---|---|---|
| THE HAGUE | 18-05-1987 | BLURTON M.D |